# FASCICULE DE BREVET EUROPEEN

(11) **EP 2 569 665 B1**
(45) Date de publication et mention de la délivrance du brevet: **14.02.2018**
(21) Numéro de dépôt: 11720082.4
(22) Date de dépôt: 11.05.2011
(51) Int. Cl.: G02B 6/44

(54) **DISPOSITIF DE RACCORDEMENT DE TUBES DE PROTECTION D'UN CABLE A FIBRES OPTIQUES, TRONÇON D'UN CIRCUIT DE TRANSMISSION OPTIQUE COMPORTANT UN TEL DISPOSITIF ET ELEMENT D'ETANCHEITE POUR UN TEL DISPOSITIF**
VORRICHTUNG FÜR DEN ANSCHLUSS VON SCHUTZROHREN EINES GLASFASERKABELS, ABSCHNITT EINER OPTISCHEN ÜBERTRAGUNGSSCHALTUNG MIT EINER DERARTIGEN VORRICHTUNG UND VERSIEGELUNGSELEMENT FÜR EINE DERARTIGE VORRICHTUNG
DEVICE FOR CONNECTING PROTECTIVE TUBES OF A FIBER-OPTIC CABLE, SECTION OF AN OPTICAL TRANSMISSION CIRCUIT COMPRISING SUCH A DEVICE AND SEALING ELEMENT FOR SUCH A DEVICE

(30) Priorité: 24.11.2010 FR 1059694; 11.05.2010 FR 1053687
(43) Date de publication de la demande: 20.03.2013
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2011/057634
(87) Numéro de publication internationale: WO 2011/141517

(56) Documents cités:
- EP-A1- 0 363 188
- EP-A1- 1 818 702

## Description

La présente invention concerne un dispositif de raccordement de tubes de protection d'un câble à fibres optiques et un tronçon d'un circuit de transmission optique comportant un tel dispositif. L'invention concerne également un élément d'étanchéité particulièrement adapté pour un tel dispositif.

Un circuit de transmission optique comprend un câble à fibres optiques reçu dans des tubes de protection reliés les uns aux autres par des dispositifs de raccordement. L'installation d'un tel circuit débute par la mise en place et le raccordement des tubes dans lesquels le câble à fibres optiques va être introduit sous pression d'air de manière à être poussé par l'air le long des tubes. Les dispositifs de raccordement doivent donc présenter deux états : un état de montage dans lequel le libre passage du câble à fibres optiques est autorisé et un état d'utilisation dans lequel les dispositifs de raccordement isolent les tubes qu'ils raccordent en créant une étanchéité autour du câble à fibres optiques.

Il est connu du document US-A-2007200344 un dispositif de raccordement de tubes de protection d'un câble à fibres optiques, comprenant un corps tubulaire délimitant un canal comportant un premier logement d'extrémité et un deuxième logement d'extrémité qui sont chacun agencés pour recevoir un des tubes et pourvus de moyens de retenue étanche dudit tube. Le corps comportant un redan annulaire s'étendant entre les logements pour former une butée à l'enfoncement des tubes dans les logements. Un élément annulaire d'étanchéité est disposé dans le premier logement au voisinage d'un flanc tronconique du redan. L'élément d'étanchéité a un état de repos dans lequel l'élément d'étanchéité délimite une section de libre passage du câble. Lors de l'enfoncement du tube dans le premier logement, le tube force l'élément d'étanchéité dans la restriction délimitée dans le canal par le redan annulaire qui déforme l'élément d'étanchéité vers un deuxième état dans lequel l'élément d'étanchéité délimite une section inférieure à la section du câble. L'engagement à force de l'élément d'étanchéité dans la restriction du canal demande un effort important à l'utilisateur lors de l'insertion du tube dans le premier logement. En outre, le comportement de l'élément d'étanchéité lors de son insertion dans la restriction est aléatoire. Il est dès lors difficile pour l'opérateur de savoir si le tube a été suffisamment enfoncé pour obtenir la déformation souhaitée de l'élément d'étanchéité. Le dimensionnement de l'élément d'étanchéité et de la restriction du canal, ainsi que le choix du matériau de l'élément d'étanchéité sont délicats. Enfin, ces raccords ne sont pas réutilisables, l'élément d'étanchéité restant dans son deuxième état après le retrait des tubes.

Un but de l'invention est de fournir un dispositif de raccordement amélioré.

A cette fin, on prévoit, selon l'invention, un dispositif de raccordement de tubes de protection d'un câble à fibres optiques, comprenant un corps tubulaire délimitant un canal comportant un premier logement d'extrémité et un deuxième logement d'extrémité qui sont chacun agencés pour recevoir un des tubes et pourvus de moyens de retenue étanche dudit tube. Le corps comporte un redan annulaire s'étendant entre les logements pour former une butée à l'enfoncement des tubes dans les logements et le dispositif comporte un élément annulaire d'étanchéité qui est disposé dans le premier logement au voisinage d'un flanc du redan et qui est déformable depuis un premier état dans lequel l'élément d'étanchéité délimite une section de libre passage du câble et un deuxième état dans lequel l'élément d'étanchéité délimite une section inférieure à une section du câble. L'élément d'étanchéité est agencé pour être amené dans son deuxième état sous l'effet d'une compression axiale et le premier logement est agencé pour que le tube puisse comprimer axialement l'élément d'étanchéité annulaire contre le redan.

L'élément d'étanchéité est déformé contre le redan sans pénétrer dans celui-ci. La déformation est ainsi obtenue de manière directe par l'action du tube ce qui permet de simplifier la conception pour limiter l'effort nécessaire à la déformation de l'élément d'étanchéité et faciliter la perception par l'opérateur d'un enfoncement correct du tube. La déformation de l'élément d'étanchéité est réversible de sorte qu'en cas de besoin, il est possible de déconnecter les tubes pour les reconnecter ensuite sans intervention sur l'élément d'étanchéité.

De préférence, le corps comporte un relief disposé dans le premier logement d'un côté de l'élément d'étanchéité opposé au redan et agencé pour former une butée franchissable pour le tube de telle manière que le tube en butée contre le relief laisse l'élément d'étanchéité dans son premier état et le tube ayant franchi le relief puisse comprimer axialement l'élément d'étanchéité annulaire contre le redan.

Ceci renforce la perception par l'opérateur d'un enfoncement correct et sécurise l'utilisation du dispositif de raccordement.

Avantageusement, le corps est réalisé en un matériau transparent et comporte des indications représentatives d'un enfoncement jusqu'au relief et d'un enfoncement complet du tube dans le premier logement.

L'opérateur peut ainsi effectuer un contrôle visuel de l'enfoncement des tubes.

Selon un premier mode de réalisation particulier de l'élément d'étanchéité, l'élément d'étanchéité comporte deux parois annulaires ayant des circonférences internes liées l'une à l'autre et des circonférences externes écartées l'une de l'autre et présente de préférence une section transversale de forme en V ou en U.

La structure de l'élément d'étanchéité est ainsi particulièrement simple et la déformation de l'élément d'étanchéité vers son deuxième état nécessite l'exercice d'un effort relativement faible de compression axiale.

Selon un deuxième mode de réalisation particulier de l'élément d'étanchéité, l'élément d'étanchéité comprend une partie fixe en appui contre le redan et une partie mobile reliée à la partie fixe par un voile tubulaire agencé pour se déformer vers l'intérieur lorsque la partie mobile est rapprochée de la partie fixe et, de préférence, la partie mobile a un diamètre externe inférieure à un diamètre interne d'un chambrage de la partie fixe pour pouvoir pénétrer dans ce chambrage.

La compression axiale de l'élément d'étanchéité peut être obtenue en exerçant un effort relativement faible.

L'invention a également pour objet un tronçon d'un circuit de transmission optique comprenant un câble à fibres optiques s'étendant dans deux tubes connectés à un dispositif de raccordement du type défini précédemment.

L'invention a en outre pour objet un élément annulaire d'étanchéité déformable depuis un premier état dans lequel l'élément d'étanchéité délimite une section de grand passage et un deuxième état dans lequel l'élément d'étanchéité délimite une section de petit passage. L'élément d'étanchéité est agencé pour être amené dans son deuxième état sous l'effet d'une compression axiale et pour se déformer dans son deuxième état le long d'une ligne annulaire sinueuse.

Ce mode de déformation permet une grande amplitude de déformation tout en assurant une ferme application de l'élément d'étanchéité dans son deuxième état sur le câble à fibres optiques dans l'application envisagée ci-dessus.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en demi-coupe longitudinale d'un dispositif de raccordement conforme à un premier mode de réalisation de l'invention, avant montage des tubes,
- les figures 2 et 3 sont des vues analogues à la figure 1, le dispositif de raccordement étant respectivement dans son état de montage et dans son état d'utilisation, avec les tubes raccordés,
- les figures 4 et 5 sont des vues analogues à la figure 1 d'un dispositif de raccordement selon un deuxième mode de réalisation, respectivement avant raccordement des tubes et dans l'état d'utilisation,
- les figures 6 et 7 sont des vues analogues à la figure 1 d'un dispositif de raccordement selon un troisième mode de réalisation, respectivement avant raccordement des tubes et dans l'état d'utilisation,
- la figure 8 est une vue en perspective d'un élément d'étanchéité conforme à l'invention, dans son premier état,
- la figure 9 est une vue partielle en coupe d'un dispositif selon une variante de réalisation, équipé dudit élément d'étanchéité, dans son deuxième état,
- la figure 10 est une vue en perspective d'un élément d'étanchéité selon une variante de réalisation, l'élément d'étanchéité étant dans son premier état.

En référence aux figures, le dispositif de raccordement de l'invention, généralement désigné en 1, est destiné à permettre le raccordement l'un à l'autre de tubes de protection 101, 102 d'un câble à fibres optiques 103 s'étendant dans les tubes 101, 102 au travers du dispositif de raccordement 1.

Le dispositif de raccordement 1 comprend un corps 2 tubulaire délimitant un canal 3 comportant un premier logement d'extrémité 4.1 et un deuxième logement d'extrémité 4.2 qui sont agencés pour recevoir les tubes 101, 102. Les logements 4.1, 4.2 sont chacun pourvus de moyens, généralement désignés en 5, de retenue étanche dudit tube. Les moyens de retenue étanche 5 comprennent ici une rondelle 6 déformable ayant une circonférence interne dentée pour mordre la surface extérieure du tube, un poussoir 7 de déconnexion et un élément d'étanchéité 8 destiné à enserrer la surface extérieure du tube 101, 102. La structure et l'agencement des moyens de retenue étanche 5 sont connus en eux-mêmes et ne seront pas plus détaillés ici. L'utilisation d'une rondelle déformable dentée est avantageuse car elle permet l'accrochage du tube sans recul de celui-ci.

Le corps 2 comporte un redan annulaire 9 s'étendant en saillie dans le canal 3 entre les logements 4.1, 4.2 pour former une butée à l'enfoncement des tubes 101, 102 dans les logements 4.1, 4.2.

Un élément annulaire d'étanchéité 10 est disposé dans le premier logement 4.1 au voisinage d'un flanc radial 11 du redan 9. L'élément d'étanchéité 10 est déformable depuis un premier état dans lequel l'élément d'étanchéité 10 délimite une section de libre passage du câble 103 vers un deuxième état dans lequel l'élément d'étanchéité 10 délimite une section inférieure à une section du câble 103. L'élément d'étanchéité 10 est agencé pour être amené dans son deuxième état sous l'effet d'un effort axial de compression.

Le premier logement 4.1 est agencé pour que le tube 101 puisse comprimer axialement l'élément d'étanchéité 10 annulaire contre le redan 9.

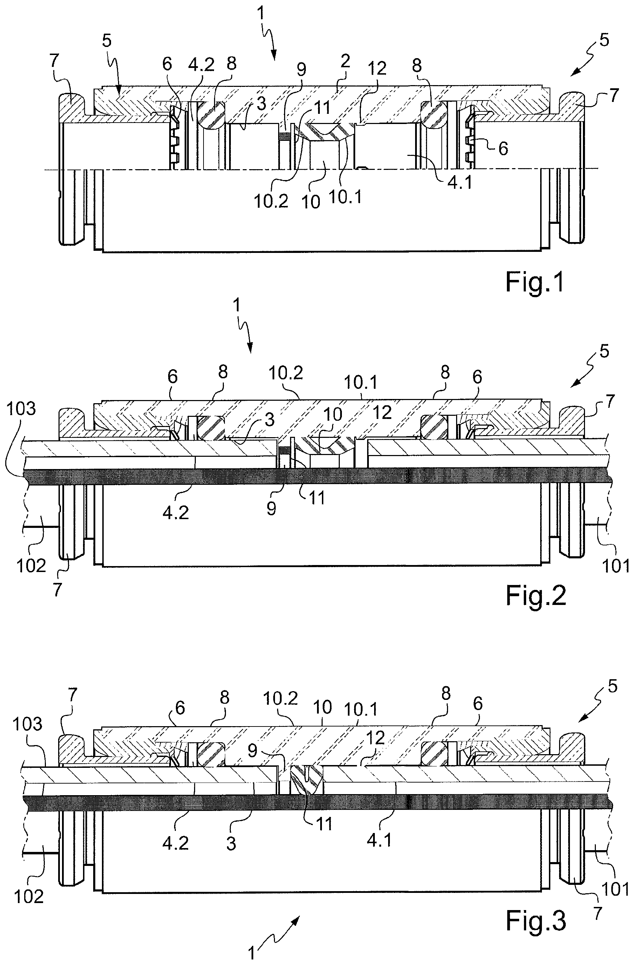

En référence aux figures 1 à 3 et conformément au premier mode de réalisation, le corps 2 comporte un relief 12 disposé dans le premier logement 4.1 d'un côté de l'élément d'étanchéité 10 opposé au redan 9 et agencé pour former une butée franchissable pour le tube 101 de telle manière que le tube 101 en butée contre le relief 12 laisse l'élément d'étanchéité 10 dans son premier état. Le relief 12 est d'une seule pièce avec le corps 2. Le tube 101 peut franchir le relief 12 du fait de sa faible hauteur et par déformation élastique.

L'élément d'étanchéité 10 comporte deux parois 10.1, 10.2 annulaires ayant des circonférences internes liées l'une à l'autre et des circonférences externes écartées l'une de l'autre. Les parois 10.1, 10.2 sont écartées l'une de l'autre en définissant une section transversale en V, lorsque l'élément d'étanchéité 10 est dans son premier état, et sont en contact l'une de l'autre lorsque l'élément d'étanchéité est dans son deuxième état. On comprend que dans ce dernier état, les parois s'étendent radialement et ont conservé la même longueur de sorte la section de passage délimitée par l'élément d'étanchéité 10 est très inférieure à celle délimitée dans le premier état.

Pour l'installation du câble 103, les tubes 101, 102 sont introduits dans les logements 4.1, 4.2 pour former un circuit dans lequel le câble 103 est destiné à s'étendre. Le tube 101 est enfoncé jusqu'au relief 12 et le tube 102 jusqu'au redan 9 (figure 2). Les éléments d'étanchéité 8 assurent l'étanchéité du raccordement et les rondelles 6 empêchent le recul des tubes 101, 102. Le câble 103 est ensuite introduit dans un tube d'extrémité du circuit et de l'air sous pression est également introduit dans ce tube pour pousser le câble le long des tubes et à travers les dispositifs de raccordement.

Lorsque le câble 103 est en place, les tubes 101 sont enfoncés au-delà du relief 12 pour comprimer axialement l'élément d'étanchéité 10 et amener celui-ci vers son deuxième état dans lequel l'élément d'étanchéité 10 enserre le câble 103 (figure 3).

On notera que les parois 10.1, 10.2 sont définies par des surfaces s'évasant en direction de la circonférence externe de manière à avoir une bonne stabilité de l'élément d'étanchéité 10 dans son deuxième état.

Les éléments identiques ou analogues à ceux précédemment décrits en relation avec le premier mode de réalisation portent les mêmes références numériques dans la description qui suit des deux autres modes de réalisation.

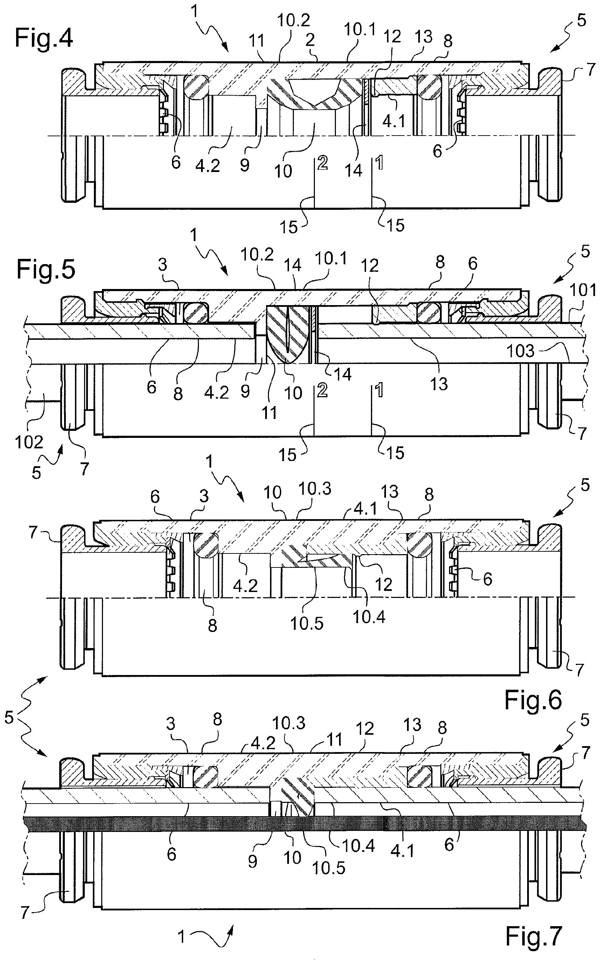

En référence aux figures 4 et 5 et selon le deuxième mode de réalisation, la section de passage de l'élément d'étanchéité 10 dans son premier état est très supérieure à la section de passage de l'élément d'étanchéité 10 dans son deuxième état.

Les parois 10.1, 10.2 sont très écartées l'une de l'autre et ont une longueur relativement importantes. On notera que les parois 10.1, 10.2 comporte une inflexion augmentant l'espace libre s'étendant entre elles.

Le relief 12 est ici solidaire d'une douille 13 rapportée dans le premier logement 4.1.

Dans ce mode de réalisation, une bague d'appui 14 est intercalée entre l'élément d'étanchéité 10 et le relief 12 (et donc la douille 13) pour servir de piston et faciliter la compression axiale de l'élément d'étanchéité 10. Ceci est particulièrement intéressant lorsque, comme ici, le tube 101 a un diamètre extérieur inférieur au diamètre extérieur de l'élément d'étanchéité 10.

Le corps 2 est réalisé en un matériau transparent et comporte des indications 15 représentatives d'un enfoncement jusqu'au relief 12 et d'un enfoncement complet du tube 101 dans le premier logement 4.1.

En référence aux figures 6 et 7, et selon le troisième mode de réalisation, l'élément d'étanchéité 10 comprend une partie fixe 10.3 en appui contre le redan 9 et une partie mobile 10.4 reliée à la partie fixe 10.3 par un voile tubulaire 10.5 agencé pour se déformer vers l'intérieur lorsque la partie mobile 10.4 est rapprochée de la partie fixe 10.3 La partie mobile 10.4 a un diamètre externe inférieur à un diamètre interne d'un chambrage de la partie fixe 10.3 pour pouvoir pénétrer dans ce chambrage (figure 7) lorsque l'élément d'étanchéité 10 est dans son deuxième état.

La douille 13 a une extrémité se prolongeant au-delà du relief 12 de telle manière que la partie fixe 10.3 soit prisonnière entre la douille 13 et le redan 9, et la partie mobile 10.4 soit reçue à coulissement dans ladite extrémité de la douille 13.

Le fonctionnement de ces dispositifs de raccordement est identique au premier mode de réalisation.

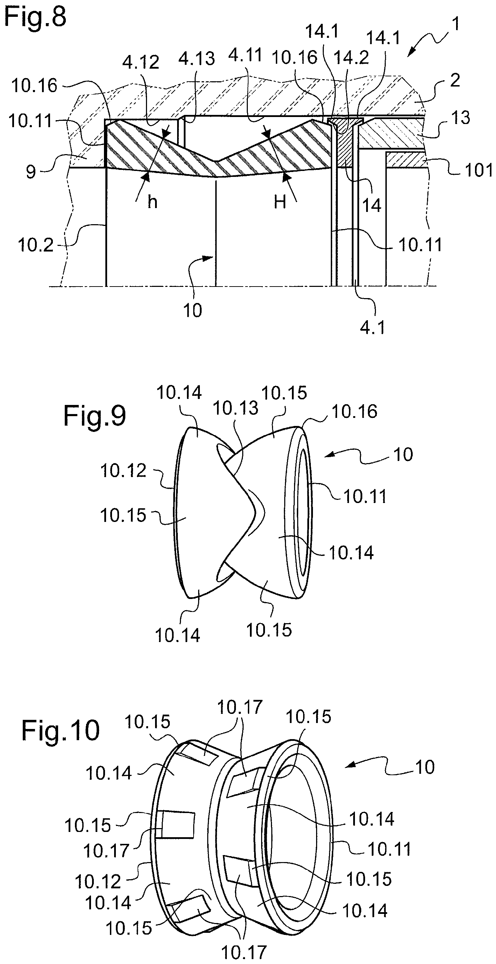

Dans la variante de réalisation des figures 8 et 9, l'élément d'étanchéité 10 est comme précédemment disposé dans le premier logement 4.1 au voisinage d'un flanc radial 11 du redan 9. L'élément d'étanchéité 10 a une extrémité 10.11 du côté de la douille 13 et une extrémité opposée 10.12 du côté du redan 9. L'élément d'étanchéité 10 est déformable depuis un premier état dans lequel l'élément d'étanchéité 10 délimite une section de libre passage du câble 103 vers un deuxième état dans lequel l'élément d'étanchéité 10 délimite une section inférieure à une section du câble 103. L'élément d'étanchéité 10 est agencé pour être amené dans son deuxième état sous l'effet d'un effort axial de compression.

L'élément d'étanchéité 10 a une forme de diabolo tubulaire agencé pour se déformer dans son deuxième état le long d'une ligne annulaire sinueuse 10.13.

L'élément d'étanchéité 10 comporte des portions 10.14, 10.15 de raideurs différentes qui sont agencées en deux groupes axialement opposés disposés chacun à une extrémité de l'élément d'étanchéité. Ces portions comprennent des portions de plus faible raideur 10.14 alternant avec des portions de plus forte raideur 10.15 sur un même côté de l'élément d'étanchéité. Ainsi chaque portion de plus faible raideur 10.14 d'un des groupes fait face à une portion de plus forte raideur 10.15 de l'autre groupe.

Il est visible sur la figure 9 que les portions de plus faible raideur 10.14 ont une épaisseur h inférieure à une épaisseur H des portions de plus forte raideur 10.15.

Dans ce mode de réalisation, une bague d'appui 14 est montée dans le premier logement 4.1 du côté de l'élément d'étanchéité 10 opposé au redan 9. La bague d'appui 14 est montée mobile axialement dans le logement 4.1 pour s'interposer entre le tube 101 et l'élément d'étanchéité 10 de manière à servir de piston et faciliter la compression axiale de l'élément d'étanchéité 10. Ceci est particulièrement intéressant notamment lorsque, comme ici, le tube 101 a un diamètre extérieur inférieur au diamètre extérieur de l'élément d'étanchéité 10.

La bague d'appui 14 comprend un rebord externe 14.1 s'étendant en saillie axiale pour s'introduire entre la paroi du corps 2 délimitant le premier logement 4.1 et une portion externe 10.16 du côté de l'extrémité 10.11 de l'élément d'étanchéité 10. La bague d'appui 14 est ici symétrique et comporte en fait deux rebords externes 14.1 s'étendant depuis des faces opposées de la bague d'appui 14 pour éviter des erreurs de montage.

Chaque rebord externe 14.1 comprend une surface intérieure tronconique 14.2 et la portion externe 10.6 de l'élément d'étanchéité 10 a une forme tronconique correspondante.

Lorsque la bague d'appui 14 est appliquée contre l'élément d'étanchéité 10 sous l'effort d'insertion du tube 101, la bague d'appui 14 décolle la portion externe 10.16 de la paroi du corps 2 pour faciliter le déplacement la portion externe 10.16 qui va conduire à la compression axiale de l'élément d'étanchéité 10 et donc à sa déformation dans son deuxième état. En effet, lors de la compression, chaque portion de plus forte raideur 10.15 se trouve en regard d'une portion de plus faible raideur 10.14 créant ainsi une déformation selon une ligne annulaire sinueuse.

Le décollement de la portion externe 10.16 permet de limiter les efforts nécessaires à la déformation de l'élément d'étanchéité 10 dans son deuxième état.

Pour faciliter encore cette déformation, le premier logement 4.1 comprend un premier tronçon 4.11 et un deuxième tronçon 4.12 qui accueillent librement à coulissement les portions externes 10.16 des extrémités 10.11 et 10.12 respectivement. Le premier tronçon 4.11 accueille en outre librement en translation la bague d'appui 14 et le deuxième tronçon 4.12, qui s'étend au voisinage du redan 9, a diamètre inférieure à celui du premier tronçon 4.11. L'étanchéité est assurée par le contact entre la portion externe 10.16 de l'extrémité 10.12 et la paroi du deuxième tronçon 4.12 du logement 4.1. Le premier tronçon 4.11 se raccorde au deuxième tronçon 4.12 du premier logement 4.1 par un épaulement 4.13 formant une butée au déplacement axial de la portion externe 10.16 de l'extrémité 10.11 et limitant ainsi la compression de l'élément d'étanchéité 10.

Ceci facilite également le retour de la portion externe 10.16 dans sa position initiale, et donc le retour de l'élément d'étanchéité 10 dans son premier état, lorsque le tube 101 est retiré.

Dans la variante de la figure 10, est représenté plus en détail un mode de réalisation particulier dans lequel les portions de plus forte raideur 10.15 incorporent un renfort local 10.17. Le renfort local 10.17 est par exemple réalisé sous la forme d'un élément, en un matériau plus raide que le matériau du corps de l'élément d'étanchéité 10, qui est rapporté sur la surface externe de l'élément d'étanchéité 10 ou incorporer dans le matériau du corps de l'élément d'étanchéité 10. Le renfort local peut également prendre la forme d'un relief. A l'inverse, les portions de plus faible raideur 10.14 peuvent incorporer un élément d'affaiblissement local comme un creux ou une couche de matériau de raideur plus faible que le reste du matériau de l'élément d'étanchéité 10.

Bien entendu, l'invention n'est pas limitée aux modes de réalisation décrits mais englobe toute variante entrant dans le champ de l'invention telle que définie par les revendications.

En particulier, l'élément d'étanchéité peut également avoir une section transversale de forme en U.

Le redan 9 et la butée 12 peuvent être interrompus ou continus.

Les moyens de retenue étanches peuvent avoir une structure différente et comprendre par exemple un verrou mobile radialement pour bloquer ou libérer un relief du tube, ou une pince.

## Revendications

1. Dispositif de raccordement (1) de tubes (101, 102) de protection d'un câble à fibres optiques (103), comprenant un corps (2) tubulaire délimitant un canal (3) comportant un premier logement (4.1) d'extrémité et un deuxième logement (4.2) d'extrémité qui sont chacun agencés pour recevoir un des tubes et pourvus de moyens (5) de retenue étanche dudit tube, le corps comportant un redan (9) annulaire s'étendant entre les logements pour former une butée à l'enfoncement des tubes dans les logements et le dispositif comportant un élément annulaire d'étanchéité (10) qui est disposé dans le premier logement au voisinage d'un flanc (11) du redan (9) et qui est déformable depuis un premier état dans lequel l'élément d'étanchéité délimite une section de libre passage du câble et un deuxième état dans lequel l'élément d'étanchéité délimite une section inférieure à une section du câble, **caractérisé en ce que** l'élément d'étanchéité est agencé pour être amené dans son deuxième état sous l'effet d'une compression axiale et le premier logement est agencé pour que le tube puisse comprimer axialement l'élément d'étanchéité annulaire contre le redan.

2. Dispositif selon la revendication 1, dans lequel le corps (2) comporte un relief (12) disposé dans le premier logement (5.1) d'un côté de l'élément d'étanchéité (10) opposé au redan (9) et agencé pour former une butée franchissable pour le tube (101) de telle manière que le tube en butée contre le relief laisse l'élément d'étanchéité dans son premier état et le tube ayant franchi le relief puisse comprimer axialement l'élément d'étanchéité annulaire contre le redan.

3. Dispositif selon la revendication 2, dans lequel le relief (12) est d'une seule pièce avec le corps (2).

4. Dispositif selon la revendication 2, dans lequel le relief (12) appartient à une douille (13) rapportée dans le corps (2).

5. Dispositif selon la revendication 4, dans lequel une bague d'appui (14) est intercalée entre la douille (13) et l'élément d'étanchéité (10).

6. Dispositif selon la revendication 1, dans lequel l'élément d'étanchéité (10) comporte deux parois annulaires ayant des circonférences internes liées l'une à l'autre et des circonférences externes écartées l'une de l'autre.

7. Dispositif selon la revendication 6, dans lequel l'élément d'étanchéité (10) a une section transversale de forme en V ou en U.

8. Dispositif selon la revendication 6, dans lequel les parois sont définies par des surfaces s'évasant en direction de la circonférence externe.

9. Dispositif selon la revendication 1, dans lequel l'élément d'étanchéité (10) comprend une partie fixe (10.3) en appui contre le redan (9) et une partie mobile (10.4) reliée à la partie fixe par un voile tubulaire (10.5) agencé pour se déformer vers l'intérieur lorsque la partie mobile est rapprochée de la partie fixe.

10. Dispositif selon la revendication 9, dans lequel la partie mobile (10.4) a un diamètre externe inférieur à un diamètre interne d'un chambrage de la partie fixe (10.3) pour pouvoir pénétrer dans ce chambrage.

11. Dispositif selon la revendication 1, dans lequel le corps (2) est réalisé en un matériau transparent et comporte des indications (15) représentatives d'un enfoncement jusqu'au relief et d'un enfoncement complet du tube dans le premier logement (4.1).

12. Dispositif selon la revendication 1, dans lequel l'élément d'étanchéité (10) est agencé pour se déformer dans son deuxième état le long d'une ligne annulaire sinueuse (10.13).

13. Dispositif selon la revendication 12, dans lequel l'élément d'étanchéité (10) comporte des portions axialement opposées de raideurs différentes, des portions de plus faible raideur (10.14) alternant avec des portions de plus forte raideur (10.15) sur un même côté de l'élément d'étanchéité.

14. Dispositif selon la revendication 13, dans lequel les portions de plus faible raideur (10.14) ont une épaisseur inférieure à une épaisseur des portions de plus forte raideur (10.15).

15. Dispositif selon la revendication 13, dans lequel les portions de plus forte raideur (10.15) incorporent un renfort local (10.17).

16. Dispositif selon la revendication 1, dans lequel une bague (14) est montée mobile axialement dans le premier logement (4.1) du corps (2) pour s'interposer entre le tube et l'élément d'étanchéité (10).

17. Dispositif selon la revendication 16, dans lequel la bague (14) comprend un rebord externe (14.1) s'étendant en saillie axiale pour s'introduire entre le corps (2) et une portion externe (10.16) de l'élément d'étanchéité (10).

18. Dispositif selon la revendication 17, dans lequel le rebord externe (14.1) comprend une surface intérieure tronconique (14.2) et la portion externe (10.16) de l'élément d'étanchéité (10) a une forme tronconique.

19. Dispositif selon la revendication 1, dans lequel le premier logement (4.1) comprend un premier tronçon (4.11) pour accueillir librement en translation une portion externe (10.16) de l'élément d'étanchéité (10) et, au voisinage du redan (9), un deuxième tronçon (4.12) pour accueillir une portion externe (10.16) de l'extrémité (10.12) opposée de l'élément d'étanchéité (10).

20. Dispositif selon la revendication 19, dans lequel le premier tronçon (4.11) a un diamètre supérieure à un diamètre du deuxième tronçon (4.12) et se raccorde au deuxième tronçon (4.12) par un épaulement (4.13) formant une butée à la translation de la portion externe (10.16) accueillie librement.

21. Tronçon d'un circuit de transmission optique comprenant un câble à fibres optiques (103) s'étendant dans deux tubes (101, 102) connectés à un dispositif de raccordement (1) conforme à l'une quelconque des revendications précédentes.

22. Elément annulaire d'étanchéité (10) déformable depuis un premier état dans lequel l'élément d'étanchéité délimite une section de grand passage et un deuxième état dans lequel l'élément d'étanchéité délimite une section de petit passage, **caractérisé en ce que** l'élément d'étanchéité est agencé pour être amené dans son deuxième état sous l'effet d'une compression axiale et pour se déformer dans son deuxième état le long d'une ligne annulaire sinueuse (10.13).

23. Elément selon la revendication 22, dans lequel l'élément d'étanchéité comporte des portions axialement opposées de raideurs différentes, des portions de plus faible raideur (10.14) alternant avec des portions de plus forte raideur (10.15) sur un même côté de l'élément d'étanchéité.

24. Elément selon la revendication 22, dans lequel les portions de plus faible raideur (10.14) ont une épaisseur inférieure à une épaisseur des portions de plus forte raideur (10.15).

25. Elément selon la revendication 23, dans lequel les portions de plus forte raideur (10.15) incorporent un renfort local (10.17).

## Patentansprüche

1. Vorrichtung (1) zum Verbinden von Rohren (101, 102) zum Schutz eines Glasfaserkabels (103), umfassend ein rohrförmiges Gehäuse (2), das einen Kanal (3) begrenzt, der eine erste Endaufnahme (4.1) und eine zweite Endaufnahme (4.2) umfasst, die jeweils ausgebildet sind, um eines der Rohre aufzunehmen, und mit Mitteln (5) zum dichten Halten des Rohres versehen sind, wobei das Gehäuse einen ringförmigen Vorsprung (9) umfasst, der sich zwischen den Aufnahmen erstreckt, um einen Anschlag entgegen einem Eindrücken der Rohre in die Aufnahmen zu bilden, und wobei die Vorrichtung ein ringförmiges Dichtungselement (10) umfasst, das in der ersten Aufnahme nahe einer Flanke (11) des Vorsprungs (9) angeordnet ist und das von einem ersten Zustand, in dem das Dichtungselement einen Querschnitt für einen freien Durchtritt des Kabels begrenzt, in einen zweiten Zustand verformbar ist, in dem das Dichtungselement einen Querschnitt begrenzt, der kleiner als ein Querschnitt des Kabels ist, **dadurch gekennzeichnet, dass** das Dichtungselement ausgebildet ist, um unter der Wirkung einer axialen Kompression in seinen zweiten Zustand gebracht zu werden, und die erste Aufnahme ausgebildet ist, damit das Rohr das ringförmige Dichtungselement gegen den Vorsprung axial zusammenpressen kann.

2. Vorrichtung nach Anspruch 1, bei der das Gehäuse (2) eine Erhebung (12) umfasst, die in der ersten Aufnahme (5.1) auf einer dem Vorsprung (9) abgewandten Seite des Dichtungselements (10) angeordnet und ausgebildet ist, um einen überwindbaren Anschlag für das Rohr (101) zu bilden, derart, dass das Rohr in Anlage an der Erhebung das Dichtungselement in dessen ersten Zustand lässt und das Rohr, das die Erhebung überwunden hat, das ringförmige Dichtungselement gegen den Vorsprung axial zusammenpressen kann.

3. Vorrichtung nach Anspruch 2, bei der die Erhebung (12) einstückig mit dem Gehäuse (2) ausgebildet ist.

4. Vorrichtung nach Anspruch 2, bei der die Erhebung zu einer Hülse (13) gehört, die in dem Gehäuse (2) befestigt ist.

5. Vorrichtung nach Anspruch 4, bei der ein Anlagering (14) zwischen der Hülse (13) und dem Dichtungselement (10) eingefügt ist.

6. Vorrichtung nach Anspruch 1, bei der das Dichtungselement (10) zwei ringförmige Wände umfasst, die innere Umfänge haben, die miteinander verbunden sind, sowie äußere Umfänge, die zueinander beabstandet sind.

7. Vorrichtung nach Anspruch 6, bei der das Dichtungselement (10) einen V- oder U-förmigen Querschnitt hat.

8. Vorrichtung nach Anspruch 6, bei der die Wände von Oberflächen definiert sind, die in Richtung des äußeren Umfangs weiter werden.

9. Vorrichtung nach Anspruch 1, bei der das Dichtungselement (10) einen ortsfesten Abschnitt (10.3) in Anlage an dem Vorsprung (9) und einen beweglichen Abschnitt (10.4) umfasst, der mit dem ortfesten Abschnitt über einen rohrförmigen Steg (10.5) verbunden ist, der ausgebildet ist, um sich nach innen zu verformen, wenn der bewegliche Abschnitt an den ortsfesten Abschnitt angenähert wird.

10. Vorrichtung nach Anspruch 9, bei der der bewegliche Abschnitt (10.4) einen Außendurchmesser hat, der kleiner als ein Innendurchmesser einer Versenkung des ortsfesten Abschnittes (10.3) ist, um in diese Versenkung eindringen zu können.

11. Vorrichtung nach Anspruch 1, bei der das Gehäuse (2) aus einem transparenten Material hergestellt ist und Anzeigen (15) umfasst, die repräsentativ für ein Eindrücken bis zur Erhebung und ein vollständiges Eindrücken des Rohres in die erste Aufnahme (4.1) sind.

12. Vorrichtung nach Anspruch 1, bei der das Dichtungselement (10) ausgebildet ist, um sich in seinem zweiten Zustand entlang einer ringförmigen Schlangenlinie (10.13) zu verformen.

13. Vorrichtung nach Anspruch 12, bei der das Dichtungselement (10) axial entgegengesetzte Abschnitte mit unterschiedlichen Steifigkeiten umfasst, wobei sich Abschnitte (10.14) mit geringerer Steifigkeit mit Abschnitten (10.15) höherer Steifigkeit auf einer selben Seite des Dichtungselements abwechseln.

14. Vorrichtung nach Anspruch 13, bei der die Abschnitte (10.14) mit geringerer Steifigkeit eine Dicke haben, die kleiner als eine Dicke der Abschnitte (10.15) mit höherer Steifigkeit ist.

15. Vorrichtung nach Anspruch 13, bei der die Abschnitte (10.15) mit höherer Steifigkeit eine lokale Verstärkung (10.17) einschließen.

16. Vorrichtung nach Anspruch 1, bei der ein Ring (14) in der ersten Aufnahme (4.1) des Gehäuses (2) axial beweglich gelagert ist, um sich zwischen dem Rohr und dem Dichtungselement (10) anzuordnen.

17. Vorrichtung nach Anspruch 16, bei der der Ring (14) einen äußeren Rand (14.1) umfasst, der axial vorsteht, um sich zwischen dem Gehäuse (2) und einem äußeren Abschnitt (10.16) des Dichtungselements (10) einzufügen.

18. Vorrichtung nach Anspruch 17, bei der der äußere Rand (14.1) eine kegelstumpfförmige Innenfläche (14.2) umfasst und der äußere Abschnitt (10.16) des Dichtungselements (10) eine kegelstumpfförmige Form hat.

19. Vorrichtung nach Anspruch 1, bei der die erste Aufnahme (4.1) einen ersten Abschnitt (4.11) umfasst, um einen äußeren Abschnitt (10.16) des Dichtungselements (10) frei in Translationsrichtung aufzunehmen, sowie nahe dem Vorsprung (9) einen zweiten Abschnitt (4.12), um einen äußeren Abschnitt (10.16) des entgegengesetzten Endes (10.12) des Dichtungselements (10) aufzunehmen.

20. Vorrichtung nach Anspruch 19, bei der der erste Abschnitt (4.11) einen Durchmesser hat, der größer als ein Durchmesser des zweiten Abschnittes (4.12) ist, und der sich über eine Schulter (4.13) an den zweiten Abschnitt (4.12) anschließt, die einen Anschlag entgegen der Translationsbewegung des frei aufgenommenen äußeren Abschnitts (10.16) zu bilden.

21. Abschnitt eines optischen Übertragungskreises, der ein Glasfaserkabel (103) umfasst, das sich in zwei Rohren (101, 102) erstreckt, die mit einer Verbindungsvorrichtung (1) gemäß einem der vorhergehenden Ansprüche verbunden sind.

22. Ringförmiges Dichtungselement (10), das von einem ersten Zustand, in dem das Dichtungselement einen Querschnitt mit großem Durchtritt begrenzt, in einen zweiten Zustand verformbar ist, in dem das Dichtungselement einen Querschnitt mit kleinem Durchtritt begrenzt, **dadurch gekennzeichnet, dass** das Dichtungselement ausgebildet ist, um unter der Wirkung einer axialen Kompression in seinen zweiten Zustand gebracht zu werden und um sich in seinem zweiten Zustand entlang einer ringförmigen Schlangenlinie (10.13) zu verformen.

23. Element nach Anspruch 22, bei dem das Dichtungselement axial entgegengesetzte Abschnitte mit unterschiedlichen Steifigkeiten umfasst, wobei sich Abschnitte (10.14) mit geringerer Steifigkeit mit Abschnitten (10.15) mit höherer Steifigkeit auf einer selben Seite des Dichtungselements abwechseln.

24. Element nach Anspruch 22, bei dem die Abschnitte (10.14) geringerer Steifigkeit eine Dicke haben, die kleiner als eine Dicke der Abschnitte (10.15) höherer Steifigkeit ist.

25. Element nach Anspruch 23, bei dem die Abschnitte (10.15) höherer Steifigkeit eine lokale Verstärkung (10.17) einschließen.

## Claims

1. A device (1) for connecting together tubes (101, 102) for protecting an optical fiber cable (103), the device comprising a tubular body (2) defining a channel (3) having a first end housing (4.1) and a second end housing (4.2), each arranged to receive one of the tubes and provided with means (5) for retaining said tube in sealed manner, the body including an annular step (9) extending between the housings in order to form an abutment to penetration of the tubes into the housings, and the device including an annular sealing element (10) that is arranged in the first housing in the vicinity of a flank (11) of the step (9) and that is deformable from a first state in which the sealing element defines a free section for passing the cable, and a second state in which the sealing element defines a section that is smaller than a section of the cable, the device being **characterized in that** the sealing element is arranged to be taken into its second state under the effect of axial compression, and the first housing is arranged to so that the tube can compress the annular sealing element axially against the step.

2. A device according to claim 1, wherein the body (2) includes a portion in relief (12) arranged in the first housing (4.1) on a side of the sealing element (10) remote from the step (9) and arranged to form an abutment that the tube (101) can pass in such a manner that the tube in abutment against the portion in relief leaves the sealing element in its first state, while the tube that has gone past the portion in relief is capable of compressing the annular sealing element axially against the step.

3. A device according to claim 2, wherein the portion in relief (12) is made integrally with the body (2).

4. A device according to claim m 2, wherein the portion in relief (12) forms part of a bushing (13) fitted in the body (2).

5. A device according to claim 4, wherein a push ring (14) is interposed between the bushing (13) and the sealing element (10).

6. A device according to claim 1, wherein the sealing element (10) comprises two annular walls having their inner circumferences connected together and their outer circumferences spaced apart from each other.

7. A device according to claim 6, wherein the sealing element (10) has a cross-section that is V-shaped or U-shaped.

8. A device according to claim 6, wherein the walls are defined by surfaces that flare towards the outer circumference.

9. A device according to claim 1, wherein the sealing element (10) comprises a stationary portion (10.3) bearing against the step (9) and a movable portion (10.4) connected to the stationary portion by a tubular web (10.5) arranged to deform inwards when the movable portion is moved towards the stationary portion.

10. A device according to claim 9, wherein the movable portion (10.4) has an outer diameter that is less than the inner diameter of a chamber in the stationary portion (10.3) so as to be capable of penetrating into said chamber.

11. A device according to claim 1, wherein the body (2) is made of a transparent material and includes indications (15) representative of penetration as far as the portion in relief and full penetration of the tube into the first housing (4.1).

12. A device according to claim 1, wherein the sealing element (10) is arranged to deform into its second state along a sinuous annular line (10.13).

13. A device according to claim 12, wherein the sealing element (10) includes axially opposite portions of different stiffnesses, portions (10.14) of smaller stiffness alternating with portions (10.15) of greater stiffness on each side of the sealing element.

14. A device according to claim 13, wherein the smaller stiffness portions (10.14) are of thickness smaller than a thickness of the greater stiffness portions (10.15).

15. A device according to claim 13, wherein the greater stiffness portions (10.15) include local reinforcement (10.17).

16. A device according to claim 1, wherein a ring (14) is mounted to move axially in the first housing (4.1) of the body (2) so as to be interposed between the tube and the sealing element (10).

17. A device according to claim 16, wherein the ring (14) includes an outer rim (14.1) projecting axially so as to be inserted between the body (2) and an outer portion (10.16) of the sealing element (10).

18. A device according to claim 17, wherein the outer rim (14.1) has a frustoconical inside surface (14.2) and the outer portion (10.16) of the sealing element (10) has a frustoconical shape.

19. A device according to claim 1, wherein the first housing (4.1) has a first segment (4.11) for freely receiving an outer portion (10.16) of the sealing element (10) to move in translation, and in the vicinity of the step (9), a second segment (4.12) for receiving an outer portion (10.16) of the opposite end (10.12) of the sealing element (10).

20. A device according to claim 19, wherein the first segment (4.11) has a diameter greater than a diameter of the second segment (4.12) and is connected to the second segment (4.12) by a shoulder (4.13) forming an abutment to movement in translation of the freely received outer portion (10.16).

21. A segment of an optical transmission circuit comprising an optical fiber cable (103) extending in two tubes (101, 102) connected to a connection device (1) in accordance with any preceding claim.

22. An annular sealing element (10) deformable from a first state in which the sealing element defines a large through section and a second state in which the sealing element defines a small through section, the sealing element being **characterized in that** it is arranged to be taken into its second state under the effect of axial compression and to deform in its second state along a sinuous annular line (10.13).

23. An element according to claim 22, wherein the sealing element includes axially opposite portions of different stiffnesses, portions (10.14) of smaller stiffness alternating with portions (10.15) of greater stiffness on each side of the sealing element.

24. An element according to claim 22, wherein the smaller stiffness portions (10.14) are of thickness smaller than a thickness of the greater stiffness portions (10.15).

25. An element according to claim 23, wherein the greater stiffness portions (10.15) include local reinforcement (10.17).
